# EUROPEAN PATENT SPECIFICATION

(11) **EP 3 760 855 B1**
(45) Date of publication and mention of the grant of the patent: **18.02.2026**
(21) Application number: 19382559.3
(22) Date of filing: 01.07.2019
(51) Int. Cl.: F02M 26/12, F02M 26/30, F16B 43/02

(54) **AN EGR COOLER AND A CONNECTION ASSEMBLY**
EIN AGR-KÜHLER UND EINE VERBINDUNGSEINRICHTUNG
UN REFROIDISSEUR EGR ET UN ENSEMBLE DE CONNEXION

(43) Date of publication of application: 06.01.2021
(73) Proprietor: VALEO TERMICO, S.A., 50011 Zaragoza (ES)
(72) Inventor: SÁNCHEZ SIERRA, Guillermo, 50011 Zaragoza (ES); TORRUBIA, Reyes, 50011 Zaragoza (ES); AZNAR, Fernando José, 50011 Zaragoza (ES)
(74) Representative: Valeo Powertrain Systems

(56) References cited:
- WO-A1-02/075170
- WO-A1-2015/117835
- US-A- 4 406 474
- US-A- 4 958 603
- US-A1- 2018 023 520

## Description

The present invention generally relates to an EGR cooler and a connection assembly for compensating tolerance between the EGR cooler and a support surface.

Generally, heat exchangers or any other components are mounted on a support surface of a vehicle to provide rigid support to the heat exchangers or alike. For instance, the heat exchanger is an EGR cooler. US20180023520A1 discloses an EGR cooler assembly method to tackle durability issues. The method utilizes a welding method where the welded portions of housing, headers, and diffusers do not overlap, specifically employing laser welding. WO2015117835A1 discloses an EGR cooler arrangement to connect an inlet connection for exhaust gas to be recirculated into fresh air installation. This arrangement addresses the difficulties with thermal stress due to the high temperature of the exhaust gases meeting the lower temperature plastic components of the fresh air system, leading to material incompatibility and potential damage from thermal stresses and propose to solve this issue by using a metallic inlet nozzle integrated with a flange that connects to the fresh air system through plastic bushings. The EGR cooler is mounted on the support surface through at least three mounting points. The mounting points are provided on a housing of the EGR cooler to form the connection between the EGR cooler and the support surface. The support surface may include fixation points which are complementary to the mounting points of the EGR cooler to enable connection between the EGR cooler and the support surface. Further, two mounting points are provided in a first side of the EGR cooler, whereas one mounting points is provided in a second side of the EGR cooler. While assembling the EGR cooler, the mounting points in the first side of the EGR cooler are first screwed with the fixation points of the support surface, and then the mounting point provided in the second side of the EGR cooler are screwed with the fixation points of the support surface. Further, while mounting the mounting point in the second side of the EGR cooler, the EGR cooler may experience tolerance in Z-direction due to coupling of the mounting points in the second side of the EGR cooler with the support surface. In other words, the mounting point in the second side of the EGR cooler may not be complementary to the fixation points of the support surface due to tolerance in Z-directions of the EGR cooler, after mounting of one side of the EGR cooler on the support surface. The second side of the EGR cooler may be at an angle with respect to the support surface after coupling the first side of the EGR cooler on the support surface as such there is no proper contact between the mounting point and the fixation point, thereby resulting in improper and inconvenient connection. Due to such tolerance between the support surface and the EGR cooler, coupling of the EGR cooler on the support surface is cumbersome. If the mounting point in the second side of the EGR cooler is not in-line with the fixation points of the support surface, it is cumbersome to screw it to enable a connection between the EGR cooler and the support surface. Although, if the screw are fastened into non-complimentary the mounting point of the EGR cooler and the fixation point of the support surface, excess stress may act on the mounting point and may leads to damage of the mounting points of the EGR cooler. Therefore, the tolerance between the EGR cooler and the support surface is to be compensated to avoid damages of the EGR cooler. Further, if the tolerance between the support surface and the EGR cooler is not compensated, it is not possible to mount the EGR cooler on the support surface.

To compensate such tolerance between the support surface and the EGR cooler, casting process is applied on the mounting point of the EGR cooler and the fixation points of the support surface. However, such process requires further machining process on the casting surface to achieve perfect precision and contact, which increase cost and time. Further, such casting process is expensive and requires more time to assemble the EGR cooler on the support surface.

Accordingly, there is need for a cost-effective connection assembly for an EGR cooler to compensate tolerance between the EGR cooler and a support surface.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of the foregoing, the invention herein proves an EGR cooler according to claim 1

According to the invention, the at least one first mounting point of the housing and the first fixation point of the support plane include a complementary aperture to receive an engagement element to enable rigid connection between the housing and the support plane.

Generally, the at least one the first mounting point is provided in a first side of the housing, and the at least one second mounting point is provided in the a second side of the housing.

In one embodiment, the intermediate part has a first aperture, the at least one second mounting point has a second aperture, and the second fixation point has a third aperture, wherein the first aperture, the second aperture, and the third aperture are complementary to each and adapted to receive the engagement element there-through. The engagement element is any one of a screw or rivet.

Further, the intermediate part further includes a first portion having a top side and a bottom side, and a second portion being a tapered portion coupled to the first portion.

In one embodiment, the second portion is formed on the top side of the first portion, wherein the second portion is adapted to be coupled to the at least one second mounting point and the bottom side of the first portion is adapted to be coupled to the support plane.

In another embodiment, the second portion is formed on the bottom side of the first portion, wherein the second portion is adapted to be coupled to the support plane and the top side of the first portion is adapted to be coupled to the at least one second mounting point.

In yet another embodiment, the second portion is formed in between the top side and the bottom side of the first portion, wherein the top side of the first portion is adapted to be coupled to the at least one second mounting point and the bottom side of the first portion is adapted to be coupled to the support plane.

In another embodiment, the at least one second mounting point and the intermediate part is coupled by any one of brazing process and welding.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1A illustrates a schematic representation of a heat exchanger mounted on a support plane, in accordance with an embodiment of the present invention;
Fig. 1B illustrates a schematic view of an intermediate part, in accordance with an embodiment of the present invention;
Fig. 2A illustrates a schematic representation of a portion of a housing mounted on the support plane with the intermediate part there between, in accordance with an embodiment of the present invention;
Fig. 2B illustrates an exploded view of a connection assembly of the EGR cooler of Fig. 2A;
Fig. 2C illustrates a cross-sectional assembled view of the connection assembly of Fig. 2A;
Fig. 3A illustrates another exploded view of the connection assembly in which a second portion of the intermediate part is formed on a bottom side of a first portion of the intermediate part, in accordance with an embodiment of the present invention;
Fig. 3B illustrates a cross-sectional view of the connection assembly of Fig. 3A;
Fig. 4A illustrates an exploded view of the connection assembly in which the second portion of the intermediate part is grooved in the first portion of the intermediate part, in accordance with another embodiment of the present invention;
Fig. 4B illustrates a cross-sectional view of the connection assembly of Fig. 4A;
Fig. 5 illustrates another cross-sectional view of the connection assembly in which connection between the second mounting point and the intermediate part is formed by welding process, in accordance with an embodiment of the present invention;
Fig. 6A illustrates another schematic view of the second mounting point coupled of the intermediate part, in accordance with another embodiment of the present invention; and
Fig. 6B illustrates a vibration simulation of the second mounting point, while the second mounting point is coupled to the intermediate part of Fig. 6A.

It must be noted that the figures disclose the invention in a detailed enough way to be implemented, the figures helping to better define the invention if needs be. The invention should however not be limited to the embodiment disclosed in the description.

The present invention relates to a connection assembly for a heat exchanger, particularly for an EGR cooler, to mount on a support plane of a vehicle. Conventionally, the EGR cooler includes mounting points that are adapted to be fastened with the support plane. However, while assembling the EGR cooler on the support plane, the EGR cooler may experience some tolerance with respect to the support plane, which may damage the mounting points of the EGR cooler. To mitigate above mentioned problem, an intermediate part is provided in between the EGR cooler and the support plane, so that the tolerance between the EGR cooler and the support plane is compensated.

While aspects relating to an intermediate part for compensating tolerance between the EGR cooler and the support as described above and henceforth can be implemented for compensating tolerance of any components with respect to a plane, the embodiments are described in the context of the following system(s).

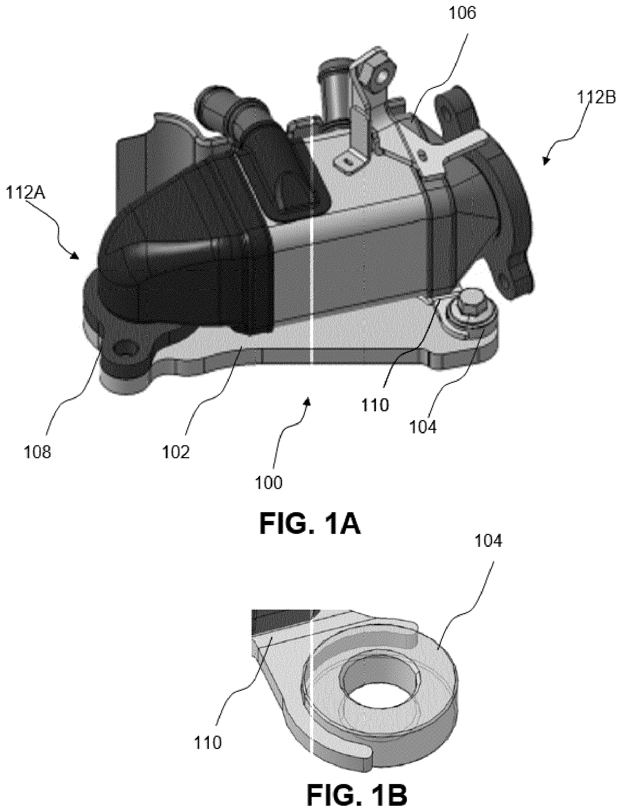

Fig. 1A illustrates a schematic view of a heat exchanger 100 mounted on a support plane 102, in accordance with an embodiment of the present invention. For instance, the heat exchanger 100 is an EGR (Exhaust Gas Recirculation) cooler, which can be mounted on the support plane 102. Generally, the heat exchanger 100, hereinafter referred to as EGR cooler, is provided in an exhaust gas circuit of a vehicle. The EGR cooler 100 can be mounted on the support plane 102, for example a flange, for providing rigid support to the EGR cooler. Further, the heat exchanger 100 can also referred to as a device. In one example, the EGR cooler 100 can mounted on a preformed support plane, so there is a possibility of tolerance between the EGR cooler 100 and the support plane 102, so an intermediate part 104 is provided in between the EGR cooler 100 and the support plane 102. The EGR cooler 100 includes a housing 106 for encapsulating a heat exchanger core (not shown in Fig. 1), one or more first mounting points 108, and one or more second mounting points 110. The one or more first mounting points 108, hereinafter referred to as first mounting point for brevity of the specification, is provided at a first side 112A of the housing 106. The one or more second mounting points 110, hereinafter referred to as second mounting point for brevity of the specification, is provided at a second side 112B of the housing 106. In one example, the first side 112A of the housing 106 is juxtaposed to the second side 112B of the housing 106. In another example, the first side 112A of the housing 106 is in an opposite to the second side 112B of the housing 106. The housing 106 may be formed by connecting multiple elements such as tank. Hereafter, the present invention is described with the housing 106 having one first mounting point 108 and one second mounting point 110 for brevity and clarity of the specification, however, it does not restrict the housing to have more than one first and second mounting points.

Further, the first mounting point 108 of the housing 106 is adapted to connect to the support plane 102. The second mounting point 110 may be connected to the intermediate part 104, which is in-turn couple to the support plane 102. The intermediate part 104 is provided in between the second mounting point 110 and the support plane 102 to form a connection between the housing 106 and the support plane 102 when the housing 106 is oblique to the support plane 102. In other words, the intermediate part 104 provides a connection between the housing 106 and the support plane 102 when the second mounting point 110 is not in-line with any fixation point of the support plane 102. The support plane 102 may include a first fixation point 114 and a second fixation point 116 spaced apart from the first fixation point 114. In one example, the first fixation point 114 may be in-line with the first mounting point 108 of the housing and receives an engagement element to couple the first side 112A of the housing 106 on the support plane 102. The second fixation point 116 may be in-line with the intermediate part 104 and the second mounting point 110 to receive another engagement element to couple the second side 112B of the housing 106 to the support plane 102 when the housing 106 is oblique to the support plane 102. In one embodiment, the first fixation point 114 of the support plane 102, and the first mounting point 108 of the housing 106 includes a complementary aperture to receive the engagement element and enable rigid connection between the housing 106 and the support plane 102.

Fig. 1B illustrates a schematic view of the intermediate part 104, in accordance with an embodiment of the present invention. In one embodiment, the intermediate part 104 is single whole component. In another embodiment, the intermediate part 104 include a first portion and a second portion, where the first portion and the second portion are coupled together to form the intermediate part 104. In one embodiment, the second mounting point 110 being a bracket and is coupled to the intermediate part 104.

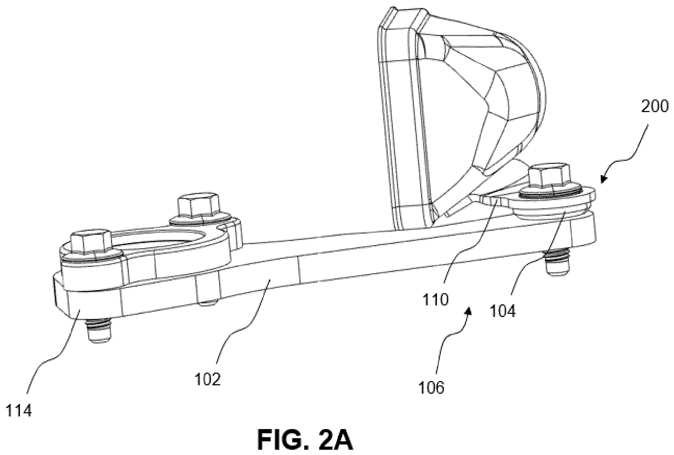

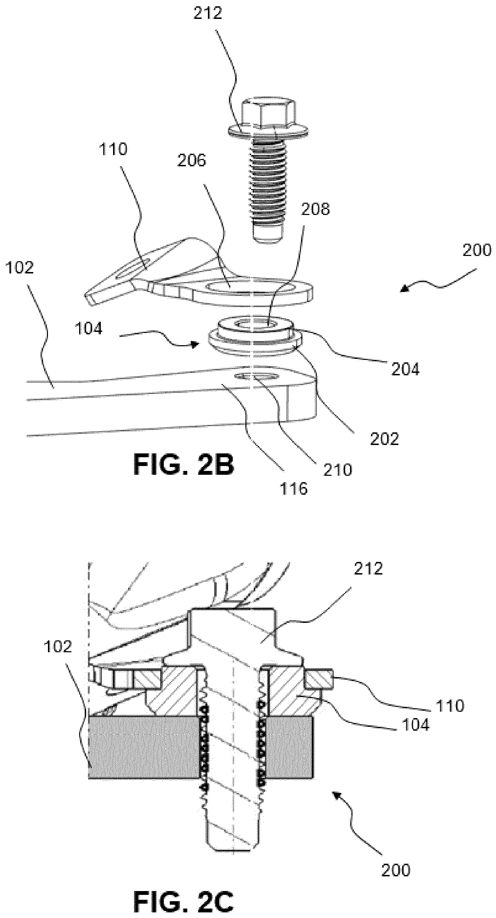

Figs. 2A-C illustrate different views of the housing 106 coupled in the support plane 102 by the intermediate part 104, in accordance with an embodiment of the present invention. Further, the second mounting point 110, the intermediate part 104, and the second fixation point 116 of the support plane 102 are collectively referred to as a connection assembly 200. Fig. 2B illustrates an exploded view of the connection assembly 200 of the EGR cooler 100. According to this embodiment, the intermediate part 104 having the first portion 202 and the second portion 204, wherein the second portion 204 is formed on a top side of the first portion 202. Further, the second portion 204 is tapered portion that is coupled to the first portion 202. Further, the second portion 204 is adapted to be coupled to the second mounting point 110 and the bottom side of the first portion 202 is adapted to be coupled to the support plane 102.

Further, the intermediate part 104 has a first aperture 206, the at least one second mounting point 110 has a second aperture 208, and the second fixation point 116 has a third aperture 210, where the first aperture 206, the second aperture 208, and the third aperture 210 are complementary to each and adapted to receive an engagement element 212. In one embodiment, the engagement element 212 is any one of screw, rivet or alike. Initially, the intermediate part 104 is coupled to the support plane 102, followed by coupling the second mounting point 110 on the intermediate part 104. Thereafter, the engagement element 212 is fasten into the corresponding apertures of the second mounting point 110, the intermediate part 104, and the second fixation point 116 of the support plane 102. Fig. 2C illustrates a cross-sectional assembled view of the connection assembly 200. In one example, the housing 106 is oblique to the support plane 102 in Z-direction, which causes stress on the second mounting point 110. To mitigate such problem, the second mounting point 110 is coupled to the intermediate part 104, and the intermediate part 104 is further coupled to the support plane 102. Upon coupling the second mounting point 110 with the intermediate part 104, the connection assembly 200 is brazed to form rigid connection between the housing 106 of the EGR cooler 100 and the support plane 102. Therefore, any tolerance between the housing 106 and the support plane 102 is compensated. In one embodiment, the brazing process is applied on the connection assembly 200 when the tolerance between the second mounting point 110 and the intermediate part 104 is less than 0.2mm-0.3mm. In case, the tolerance between the second mounting point 110 and the intermediate part 104 is more than 0.2mm-0.3mm, welding process is applied on the connection assembly 200 to form rigid connection between the EGR cooler 100 and the support plane 102.

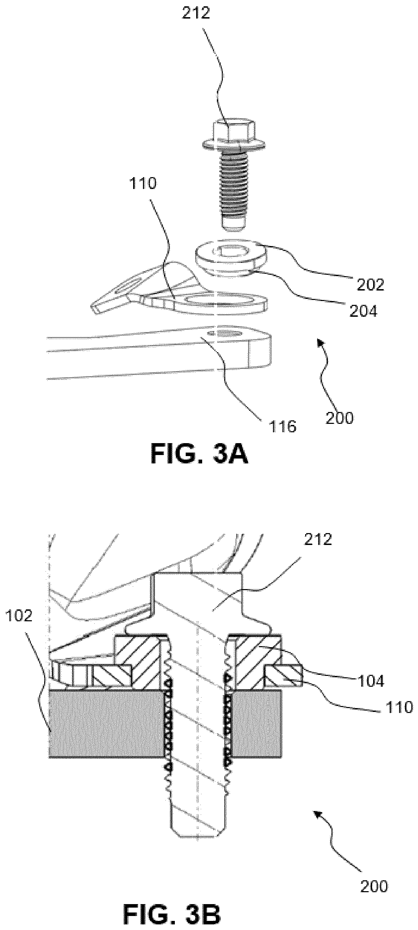

Figs. 3A and 3B illustrate different views of the connection assembly 200 having the intermediate part 104, in accordance with another embodiment of the present invention. In one example, Fig. 3A illustrates an exploded view of the connection assembly 200 in which the second portion 204 of the intermediate part 104 is formed on the bottom side of the first portion 202 of the intermediate part 104. In accordance with this embodiment of the invention, the intermediate part 104 may be provided over the second mounting point 110. Further, the second portion 204 of the intermediate part 104 is formed on the bottom side of the first portion 202, where the second portion 204 is coupled to the support plane 102 and the top side of the first portion 202 is coupled to the second mounting point 110. Fig. 3B illustrates a cross-sectional view of the connection assembly 200. As shown in Fig. 3B, the second mounting point 110 is coupled to the second portion 204 of the intermediate part 104. Thereafter, the intermediate part 104 is coupled to the second fixation point 116 of the support plane 102 to compensate the tolerance between the EGR cooler 100 and the support plane 102.

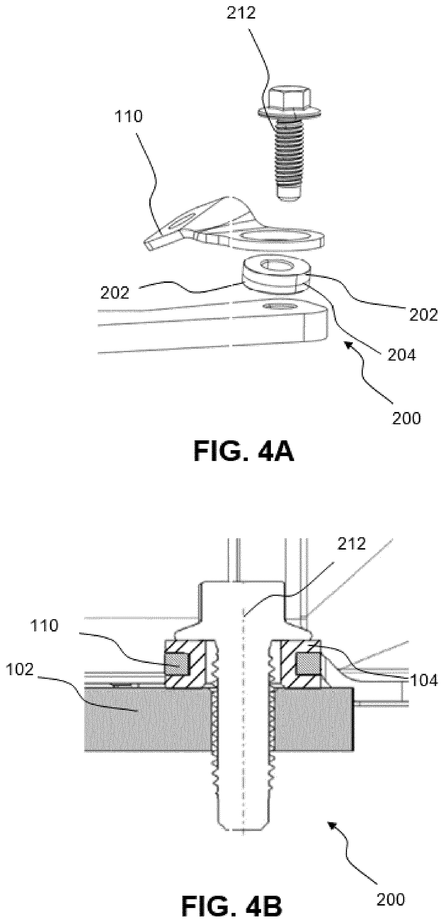

Figs. 4A and 4B illustrate different views of the connection assembly 200 having the second portion 204 grooved in the intermediate part 104, in accordance with another embodiment of the present invention. In one example, Fig. 4A illustrates an exploded view of the connection assembly 200 in which the second portion 204 of the intermediate part 104 is grooved in the first portion 202 of the intermediate part 104. In other words, the second portion 204 is provided in between the top side and bottom side of the first portion 202 of the intermediate part 104. In accordance with this embodiment of the invention, the intermediate part 104 may be provided in between the second mounting point 110 and the second fixation point 116 of the support plane 102. Further, the second portion 204 is formed in between the top side and the bottom side of the first portion 202 of the intermediate part 104, where the top side of the first portion 202 is coupled to the second mounting point 110 and the bottom side of the first portion 202 is adapted to be coupled to the second fixation point 116 of the support plane 102. Fig. 4B illustrates a cross-sectional view of the connection assembly 200. As shown in Fig. 4B, the second mounting point 110 is coupled to the second portion 204 of the intermediate part 104, which is in-between the top side and bottom side of the intermediate part 104. Thereafter, the intermediate part 104 is coupled to the second fixation point 116 of the support plane 102 to compensate the tolerance between the EGR cooler 100 and the support plane 102.

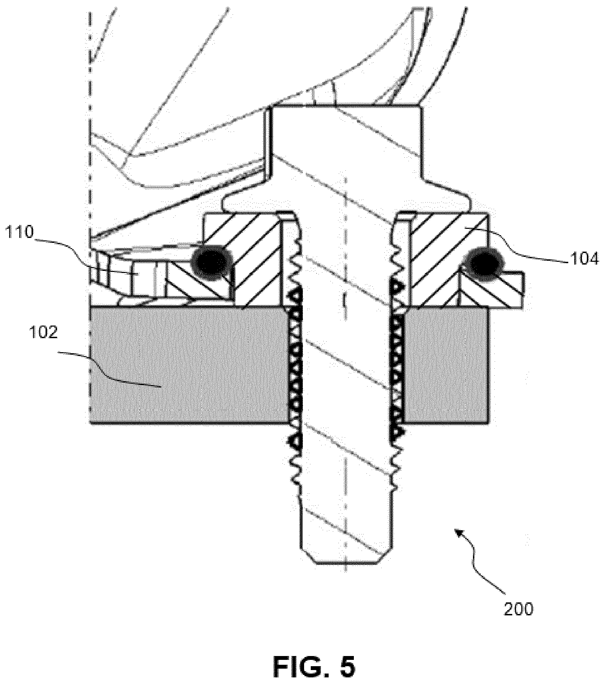

Fig. 5 illustrates another cross-sectional view of the connection assembly 200 in which connection between the second mounting point 110 and the intermediate part 104 is formed by welding process, in accordance with an embodiment of the present invention. In one example, if any gap between the second mounting point 110 and the intermediate part 104 is more than 0.2 cm, welding process is applied instead of brazing process on the intermediate part 104 to form rigid connection between the second mounting point 110 and the support plane 102. In another example, if an angle between the second mounting point 110 and the support plane 102 is more than 2.5⁰, connecting point between the mounting point 110 and the intermediate part 104 is welded to form the connection assembly 200 as shown in Fig. 5.

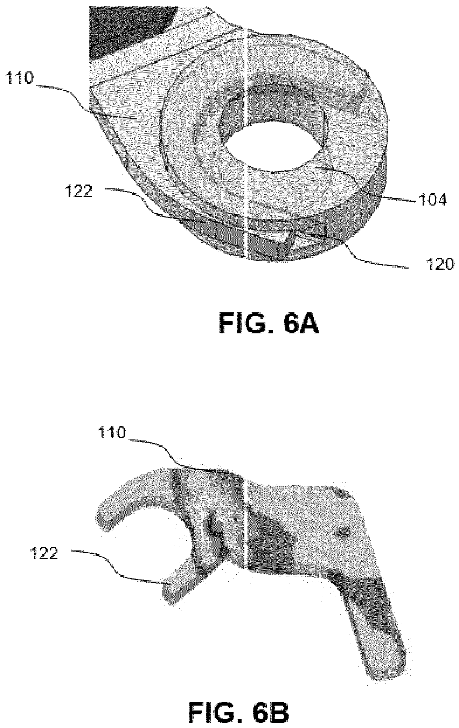

Fig. 6A illustrates another schematic view of the second mounting point 110 coupled of the intermediate part 104, in accordance with another embodiment of the present invention. In the present embodiment, the intermediate part 104 is provided with groove 120 to receive terminals of the second mounting point 110. In one example, the second mounting point 110 is a bracket having a pair of terminals 122 and adapted to be received in the groove 120 of the intermediate part 104 to form the connection assembly 200. Further, the intermediate part 104 is mounted on the support plane 102, and the engagement element 212 is provided in the complementary apertures of the intermediate part 104 and the support plane 102.

Fig. 6B illustrates a vibration simulation of the second mounting point 110, while the second mounting point is coupled to the intermediate part 104 of Fig. 6A. It is evident from Fig. 6B that the stress at the bracket 122 of the second mounting point 110 is minimal or almost nil, so damages in the second mounting point 110 is mitigated while mounting the EGR cooler 100 on the support plane 102. In one example, the support plane 102 is a flange. Further, the intermediate part 104 is fixed in the second mounting point 110 to compensate any deviations in the geometry of the EGR cooler 100 due to tolerance of each individual components, such as the housing 106, the mounting points 108, 110.

## Claims

1. An EGR cooler (100) and a connection assembly (200) for compensating tolerance between the EGR cooler (100) and a support plane (102), the EGR cooler (100) comprising:
a housing (106);
at least one first mounting point (108) provided on an outer wall of the housing (106) configured to couple with a first fixation point (114) of a support plane (102), wherein the at least one first mounting point (108) is complementary to the first fixation point (114);
at least one second mounting point (110) spaced apart from the at least one first mounting point (108), and provided on the outer wall of the housing (106);
whereby the connection assembly (200) comprises:
an intermediate part (104) configured to be formed in between the at least one second mounting point (110) and a second fixation point (116) of the support plane (102), wherein the intermediate part (104) is configured to make a connection between the at least one second mounting point (110) and the second fixation point (116) of the support plane (102) even when the second mounting point (110) is oblique to the support plane (102), and wherein the at least one second mounting point (110) is a bracket adapted to be coupled with the intermediate part (104) and wherein the intermediate part (104) is provided in between the second mounting point (110) and the support plane (102) to form a connection between the housing (106) and the support plane (102) when the housing (106) is oblique to the support plane (102).

2. EGR cooler (100) and a connection assembly (200) for compensating tolerance between the EGR cooler (100) and a support plane (102) as claimed in claim 1, wherein the at least one first mounting point (108) of the housing and the first fixation point (114) of the support plane (102) include complementary apertures adapted to receive an engagement element (212) to enable rigid connection between the housing (106) and the support plane (102).

3. EGR cooler (100) and a connection assembly (200) for compensating tolerance between the EGR cooler (100) and a support plane (102) as claimed in claim 1, wherein at least one the first mounting point (108) is provided in a first side (112A) of the housing (106), and the at least one second mounting point (110) is provided in the a second side (112B) of the housing (106).

4. EGR cooler (100) and a connection assembly (200) for compensating tolerance between the EGR cooler (100) and a support plane (102) as claimed in claim 2, wherein the intermediate part (104) has a first aperture (206), the at least one second mounting point (110) has a second aperture (208), and the second fixation point (116) has a third aperture (210), wherein the first aperture (206), the second aperture (208), and the third aperture (210) are complementary to each and adapted to receive the engagement element (212) there-through.

5. EGR cooler (100) and a connection assembly (200) for compensating tolerance between the EGR cooler (100) and a support plane (102) as claimed in any of the preceding claims, wherein the engagement element (212) is any one of a screw or rivet.

6. EGR cooler (100) and a connection assembly (200) for compensating tolerance between the EGR cooler (100) and a support plane (102) as claimed in claim 1, wherein the intermediate part (104) further includes:
a first portion (202) having a top side and a bottom side; and
a second portion (204) being a tapered portion coupled to the first portion (202).

7. EGR cooler (100) and a connection assembly (200) for compensating tolerance between the EGR cooler (100) and a support plane (102) as claimed in claim 6, wherein the second portion (204) is formed on the top side of the first portion (202), wherein the second portion (204) is adapted to be coupled to the at least one second mounting point (110) and the bottom side of the first portion (202) is adapted to be coupled to the support plane (102).

8. EGR cooler (100) and a connection assembly (200) for compensating tolerance between the EGR cooler (100) and a support plane (102) as claimed in claim 6, wherein the second portion (204) is formed on the bottom side of the first portion (202), wherein the second portion (204) is adapted to be coupled to the support plane (102) and the top side of the first portion (202) is adapted to be coupled to the at least one second mounting point (110).

9. EGR cooler (100) and a connection assembly (200) for compensating tolerance between the EGR cooler (100) and a support plane (102) as claimed in claim 6, wherein the second portion (204) is formed in between the top side and the bottom side of the first portion (202), wherein the top side of the first portion (202) is adapted to be coupled to the at least one second mounting point (110) and the bottom side of the first portion (202) is adapted to be coupled to the support plane (102).

10. EGR cooler (100) and a connection assembly (200) for compensating tolerance between the EGR cooler (100) and a support plane (102) as claimed in any of preceding claims, wherein the at least one second mounting point (110) and the intermediate part (104) is coupled by any one of brazing process and welding.

## Patentansprüche

1. Ein AGR-Kühler (100) und eine Verbindungsbaugruppe (200) zum Ausgleichen von Toleranzen zwischen dem AGR-Kühler (100) und einer Stützebene (102), wobei der AGR-Kühler (100) umfasst:
ein Gehäuse (106);
mindestens einen ersten Befestigungspunkt (108), der an einer Außenwand des Gehäuses (106) vorgesehen ist und dazu konfiguriert ist, mit einem ersten Fixierungspunkt (114) einer Stützebene (102) zu koppeln, wobei der mindestens eine erste Befestigungspunkt (108) komplementär zum ersten Fixierungspunkt (114) ist;
mindestens einen zweiten Befestigungspunkt (110), der vom mindestens einen ersten Befestigungspunkt (108) beabstandet ist und an der Außenwand des Gehäuses (106) vorgesehen ist;
wobei die Verbindungsbaugruppe (200) umfasst:
ein Zwischenteil (104), das dazu konfiguriert ist, zwischen dem mindestens einen zweiten Befestigungspunkt (110) und einem zweiten Fixierungspunkt (116) der Stützebene (102) ausgebildet zu werden, wobei das Zwischenteil (104) dazu konfiguriert ist, eine Verbindung zwischen dem mindestens einen zweiten Befestigungspunkt (110) und dem zweiten Fixierungspunkt (116) der Stützebene (102) herzustellen, auch wenn der zweite Befestigungspunkt (110) schräg zur Stützebene (102) steht, und wobei der mindestens eine zweite Befestigungspunkt (110) eine Halterung ist, die dazu angepasst ist, mit dem Zwischenteil (104) gekoppelt zu werden, und wobei das Zwischenteil (104) zwischen dem zweiten Befestigungspunkt (110) und der Stützebene (102) vorgesehen ist, um eine Verbindung zwischen dem Gehäuse (106) und der Stützebene (102) zu bilden, wenn das Gehäuse (106) schräg zur Stützebene (102) steht.

2. AGR-Kühler (100) und eine Verbindungsbaugruppe (200) zum Ausgleichen von Toleranzen zwischen dem AGR-Kühler (100) und einer Stützebene (102) nach Anspruch 1, wobei der mindestens eine erste Befestigungspunkt (108) des Gehäuses und der erste Fixierungspunkt (114) der Stützebene (102) komplementäre Öffnungen umfassen, die dazu angepasst sind, ein Eingriffselement (212) aufzunehmen, um eine starre Verbindung zwischen dem Gehäuse (106) und der Stützebene (102) zu ermöglichen.

3. AGR-Kühler (100) und eine Verbindungsbaugruppe (200) zum Ausgleichen von Toleranzen zwischen dem AGR-Kühler (100) und einer Stützebene (102) nach Anspruch 1, wobei mindestens ein erster Befestigungspunkt (108) in einer ersten Seite (112A) des Gehäuses (106) vorgesehen ist und der mindestens eine zweite Befestigungspunkt (110) in einer zweiten Seite (112B) des Gehäuses (106) vorgesehen ist.

4. AGR-Kühler (100) und eine Verbindungsbaugruppe (200) zum Ausgleichen von Toleranzen zwischen dem AGR-Kühler (100) und einer Stützebene (102) nach Anspruch 2, wobei das Zwischenteil (104) eine erste Öffnung (206) aufweist, der mindestens eine zweite Befestigungspunkt (110) eine zweite Öffnung (208) aufweist und der zweite Fixierungspunkt (116) eine dritte Öffnung (210) aufweist, wobei die erste Öffnung (206), die zweite Öffnung (208) und die dritte Öffnung (210) zueinander komplementär sind und dazu angepasst sind, das Eingriffselement (212) hindurchzunehmen.

5. AGR-Kühler (100) und eine Verbindungsbaugruppe (200) zum Ausgleichen von Toleranzen zwischen dem AGR-Kühler (100) und einer Stützebene (102) nach einem der vorhergehenden Ansprüche, wobei das Eingriffselement (212) entweder eine Schraube oder ein Niet ist.

6. AGR-Kühler (100) und eine Verbindungsbaugruppe (200) zum Ausgleichen von Toleranzen zwischen dem AGR-Kühler (100) und einer Stützebene (102) nach Anspruch 1, wobei das Zwischenteil (104) weiter umfasst:
einen ersten Abschnitt (202) mit einer Oberseite und einer Unterseite; und
einen zweiten Abschnitt (204), der ein verjüngter Abschnitt ist, der mit dem ersten Abschnitt (202) gekoppelt ist.

7. AGR-Kühler (100) und eine Verbindungsbaugruppe (200) zum Ausgleichen von Toleranzen zwischen dem AGR-Kühler (100) und einer Stützebene (102) nach Anspruch 6, wobei der zweite Abschnitt (204) auf der Oberseite des ersten Abschnitts (202) ausgebildet ist, wobei der zweite Abschnitt (204) dazu angepasst ist, mit dem mindestens einen zweiten Befestigungspunkt (110) gekoppelt zu werden, und die Unterseite des ersten Abschnitts (202) dazu angepasst ist, mit der Stützebene (102) gekoppelt zu werden.

8. AGR-Kühler (100) und eine Verbindungsbaugruppe (200) zum Ausgleichen von Toleranzen zwischen dem AGR-Kühler (100) und einer Stützebene (102) nach Anspruch 6, wobei der zweite Abschnitt (204) auf der Unterseite des ersten Abschnitts (202) ausgebildet ist, wobei der zweite Abschnitt (204) dazu angepasst ist, mit der Stützebene (102) gekoppelt zu werden, und die Oberseite des ersten Abschnitts (202) dazu angepasst ist, mit dem mindestens einen zweiten Befestigungspunkt (110) gekoppelt zu werden.

9. AGR-Kühler (100) und eine Verbindungsbaugruppe (200) zum Ausgleichen von Toleranzen zwischen dem AGR-Kühler (100) und einer Stützebene (102) nach Anspruch 6, wobei der zweite Abschnitt (204) zwischen der Oberseite und der Unterseite des ersten Abschnitts (202) ausgebildet ist, wobei die Oberseite des ersten Abschnitts (202) dazu angepasst ist, mit dem mindestens einen zweiten Befestigungspunkt (110) gekoppelt zu werden, und die Unterseite des ersten Abschnitts (202) dazu angepasst ist, mit der Stützebene (102) gekoppelt zu werden.

10. AGR-Kühler (100) und eine Verbindungsbaugruppe (200) zum Ausgleichen von Toleranzen zwischen dem AGR-Kühler (100) und einer Stützebene (102) nach einem der vorhergehenden Ansprüche, wobei der mindestens eine zweite Befestigungspunkt (110) und das Zwischenteil (104) durch entweder einen Lötprozess oder Schweißen gekoppelt sind.

## Revendications

1. Un refroidisseur EGR (100) et un ensemble de connexion (200) pour compenser la tolérance entre le refroidisseur EGR (100) et un plan de support (102), le refroidisseur EGR (100) comprenant :
un boîtier (106) ;
au moins un premier point de montage (108) prévu sur une paroi extérieure du boîtier (106) configuré pour s'accoupler avec un premier point de fixation (114) d'un plan de support (102), où le au moins un premier point de montage (108) est complémentaire au premier point de fixation (114) ;
au moins un deuxième point de montage (110) espacé du au moins un premier point de montage (108), et prévu sur la paroi extérieure du boîtier (106) ;
moyennant quoi l'ensemble de connexion (200) comprend :
une pièce intermédiaire (104) configurée pour être formée entre le au moins un deuxième point de montage (110) et un deuxième point de fixation (116) du plan de support (102), où la pièce intermédiaire (104) est configurée pour établir une connexion entre le au moins un deuxième point de montage (110) et le deuxième point de fixation (116) du plan de support (102) même lorsque le deuxième point de montage (110) est oblique par rapport au plan de support (102), et où le au moins un deuxième point de montage (110) est un support adapté pour être accouplé avec la pièce intermédiaire (104) et où la pièce intermédiaire (104) est prévue entre le deuxième point de montage (110) et le plan de support (102) pour former une connexion entre le boîtier (106) et le plan de support (102) lorsque le boîtier (106) est oblique par rapport au plan de support (102).

2. Refroidisseur EGR (100) et un ensemble de connexion (200) pour compenser la tolérance entre le refroidisseur EGR (100) et un plan de support (102) selon la revendication 1, où le au moins un premier point de montage (108) du boîtier et le premier point de fixation (114) du plan de support (102) comprennent des ouvertures complémentaires adaptées pour recevoir un élément d'engagement (212) pour permettre une connexion rigide entre le boîtier (106) et le plan de support (102).

3. Refroidisseur EGR (100) et un ensemble de connexion (200) pour compenser la tolérance entre le refroidisseur EGR (100) et un plan de support (102) selon la revendication 1, où au moins un premier point de montage (108) est prévu dans un premier côté (112A) du boîtier (106), et le au moins un deuxième point de montage (110) est prévu dans un deuxième côté (112B) du boîtier (106).

4. Refroidisseur EGR (100) et un ensemble de connexion (200) pour compenser la tolérance entre le refroidisseur EGR (100) et un plan de support (102) selon la revendication 2, où la pièce intermédiaire (104) a une première ouverture (206), le au moins un deuxième point de montage (110) a une deuxième ouverture (208), et le deuxième point de fixation (116) a une troisième ouverture (210), où la première ouverture (206), la deuxième ouverture (208), et la troisième ouverture (210) sont complémentaires entre elles et adaptées pour recevoir l'élément d'engagement (212) à travers elles.

5. Refroidisseur EGR (100) et un ensemble de connexion (200) pour compenser la tolérance entre le refroidisseur EGR (100) et un plan de support (102) selon l'une quelconque des revendications précédentes, où l'élément d'engagement (212) est l'un quelconque d'une vis ou d'un rivet.

6. Refroidisseur EGR (100) et un ensemble de connexion (200) pour compenser la tolérance entre le refroidisseur EGR (100) et un plan de support (102) selon la revendication 1, où la pièce intermédiaire (104) comprend en outre :
une première partie (202) ayant un côté supérieur et un côté inférieur ; et
une deuxième partie (204) étant une partie conique couplée à la première partie (202).

7. Refroidisseur EGR (100) et un ensemble de connexion (200) pour compenser la tolérance entre le refroidisseur EGR (100) et un plan de support (102) selon la revendication 6, où la deuxième partie (204) est formée sur le côté supérieur de la première partie (202), où la deuxième partie (204) est adaptée pour être couplée au au moins un deuxième point de montage (110) et le côté inférieur de la première partie (202) est adapté pour être couplé au plan de support (102).

8. Refroidisseur EGR (100) et un ensemble de connexion (200) pour compenser la tolérance entre le refroidisseur EGR (100) et un plan de support (102) selon la revendication 6, où la deuxième partie (204) est formée sur le côté inférieur de la première partie (202), où la deuxième partie (204) est adaptée pour être couplée au plan de support (102) et le côté supérieur de la première partie (202) est adapté pour être couplé au au moins un deuxième point de montage (110).

9. Refroidisseur EGR (100) et un ensemble de connexion (200) pour compenser la tolérance entre le refroidisseur EGR (100) et un plan de support (102) selon la revendication 6, où la deuxième partie (204) est formée entre le côté supérieur et le côté inférieur de la première partie (202), où le côté supérieur de la première partie (202) est adapté pour être couplé au au moins un deuxième point de montage (110) et le côté inférieur de la première partie (202) est adapté pour être couplé au plan de support (102).

10. Refroidisseur EGR (100) et un ensemble de connexion (200) pour compenser la tolérance entre le refroidisseur EGR (100) et un plan de support (102) selon l'une quelconque des revendications précédentes, où le au moins un deuxième point de montage (110) et la pièce intermédiaire (104) sont couplés par l'un quelconque d'un procédé de brasage et de soudage.
